# EUROPEAN PATENT SPECIFICATION

(11) **EP 1 690 594 B1**
(45) Date of publication and mention of the grant of the patent: **14.04.2010**
(21) Application number: 06003064.0
(22) Date of filing: 15.02.2006
(51) Int. Cl.: B01J 27/22, B01D 53/94

(54) **Catalyst structure and exhaust gas treatment system provided with catalyst**
Katalysatorstruktur und Abgasbehandlungssystem mit Katalysator
Structure de catalyseur et système de traitement des gaz d'échappement avec un catalyseur

(30) Priority: 15.02.2005 JP 2005037041
(43) Date of publication of application: 16.08.2006
(73) Proprietor: HITACHI, LTD., Chiyoda-ku Tokyo 100-8280 (JP)
(72) Inventor: Iwasaki, Tomio, Chiyoda-ku Tokyo 100-8220 (JP)
(74) Representative: MERH-IP Matias Erny Reichl Hoffmann

(56) References cited:
- EP-A- 0 730 900
- DE-C1- 3 836 426
- US-A1- 2003 100 446
- PATENT ABSTRACTS OF JAPAN vol. 2003, no. 12, 5 December 2003 (2003-12-05) & JP 2004 024979 A (JFE ENGINEERING KK), 29 January 2004 (2004-01-29)
- PATENT ABSTRACTS OF JAPAN vol. 2003, no. 12, 5 December 2003 (2003-12-05) & JP 2003 247414 A (TOYOTA MOTOR CORP), 5 September 2003 (2003-09-05)

## Description

### Background of the Invention

The present invention relates to an exhaust gas treatment system provided with a catalyst.

A catalyst provided in a system which treats exhaust gases from an internal combustion engine for vehicles sometimes loses its catalytic activity when the catalyst particles grow at high temperature to lose the effective catalyst area. For example, JP-A-2003-247414 proposes a method for operating an exhaust gas treatment system to prevent such disadvantage. In addition, systems for treating exhaust gases from plants and power-generation facilities have been proposed, as environmental problems become increasingly serious, as described in, e.g., JP-A-2004-24979. The catalyst structures for these systems are studied to have irregularities on the catalyst surface as a countermeasure to increase its effective catalyst area and thereby to improve the catalytic activity.

The present invention aims at providing an exhaust gas treatment system with a catalyst structure having high catalytic activity.

Thus, it is a first object of the present invention to provide an exhaust gas treatment system with a catalyst structure of high catalytic activity. It is a second object to provide an exhaust gas treatment system with a catalyst structure stable even at high temperature. It is a third object to provide a highly functional exhaust gas treatment system. These objects are achieved by an exhaust gas treatment system according to claim 1.

As a result of extensive research to attain the above-mentioned objects, the present inventors have found that a catalyst provided with nano-dots formed in contact with a carrier and catalyst particles formed in contact with the nano-dots wherein a difference in lattice constant between the carrier material and catalyst particle material is 16% or less is effective for enhancing catalytic activity. It has also found that the above difference is at least 1%, more preferably 1% to 11%. The term "latice constant" means the distance between the nearest atoms.

The objects of the present invention can be attained, for example, by an exhaust gas treatment system comprising a catalyst structure of the following structure.
(1) A catalyst structure comprising a carrier, nano-dots formed on the carrier and catalyst particles formed on the nano-dots, wherein a difference in lattice constant between the carrier material and nano-dot material is not less than 1% and not more than 16%.
(2) A catalyst structure comprising a carrier, nano-dots located adjacent to the carrier, catalyst particles formed on the nano-dots and a coating material formed in contact with the catalyst particles, wherein a difference in lattice constant between the carrier material and nano-dot material is not less than 1% and not more than 16%.

The term "major component" used in this specification means a component present at the highest atomic content, and the major component element means a component element present at the highest atomic content.

The present invention can provide an exhaust gas treatment system with a catalyst having high catalytic activity, and also a highly functional exhaust gas treatment system.

Other objects, features and advantages of the invention will become apparent from the following description of the embodiments of the invention taken in conjunction with the accompanying drawings.

### Brief Description of the Drawings

Fig. 1 outlines a catalyst structure of the first embodiment of the present invention.
Fig. 2 illustrates a relationship between catalyst WC particle/carrier lattice unconformity and diffusion coefficient ratio.
Fig. 3 illustrates a relationship between catalyst WC particle/carrier lattice unconformity and particle size at 20°C in the absence of a coating material.
Fig. 4 illustrates a relationship between catalyst WC particle/carrier lattice unconformity and particle size at 200°C in the absence of a coating material.
Fig. 5 illustrates a relationship between catalyst particle/electroconductive membrane lattice unconformity and particle size at 200°C in the presence of a coating material composed of carbon nano-horn.
Fig. 6 illustrates a relationship between catalyst WC particle/carrier lattice unconformity and particle size at 200°C in the presence of a coating material composed of B-DNA.
Fig. 7 illustrates a relationship between catalyst WC particle/carrier lattice unconformity and particle size at 20°C in the presence of a coating material composed of carbon nano-horn.
Fig. 8 illustrates a relationship between catalyst WC particle/carrier lattice unconformity and particle size at 20°C in the presence of a coating material composed of B-DNA.
Fig. 9 illustrates a relationship between catalyst MoC particle/carrier lattice unconformity and particle size at 20°C in the presence of coating material composed of B-DNA.
Fig. 10 outlines an exhaust gas treatment system as the second embodiment of the present invention.
Fig. 11 outlines an exhaust gas treatment system as the third embodiment of the present invention.

### Description of numerals

1: Carrier, 2: Nano-dot, 3: Catalyst particle, 4: Coating material, 5: Inclusion particle, 201: Electronic control unit for engine operation, 202:
Internal combustion engine, 203: Exhaust gas system, 204: Throttle valve, 205: Surge tank, 206: Intake manifold, 207: Fuel injection device, 208: Exhaust gas manifold, 209: Upstream catalytic converter, 210:
Downstream catalytic converter, 211: Throttle opening sensor, 212: Crank angle sensor, 213a, 213b: Oxygen sensor, 214: Bypass means, 215: Bypass passage, 216: Passage switching valve, 301: Exhaust gas source, 302: First bag filter, 303: Second bag filter, 304:
Adsorbent-holding bed, 305: Neutralizer injection device, 306: Fly ash heater, 307: Heavy metal treatment device, 308: Land reclamation device, 309: Ash melting device, 310: Regenerator, 311: Adsorbent, 312: Catalyst structure

### Detailed Description of the Invention

The embodiments of the present invention are described in detail by the examples illustrated in the attached drawings. It is to be understood that the present invention is not limited to the embodiments described herein, and does not exclude modifications made based on a known technique or technique known in the future.

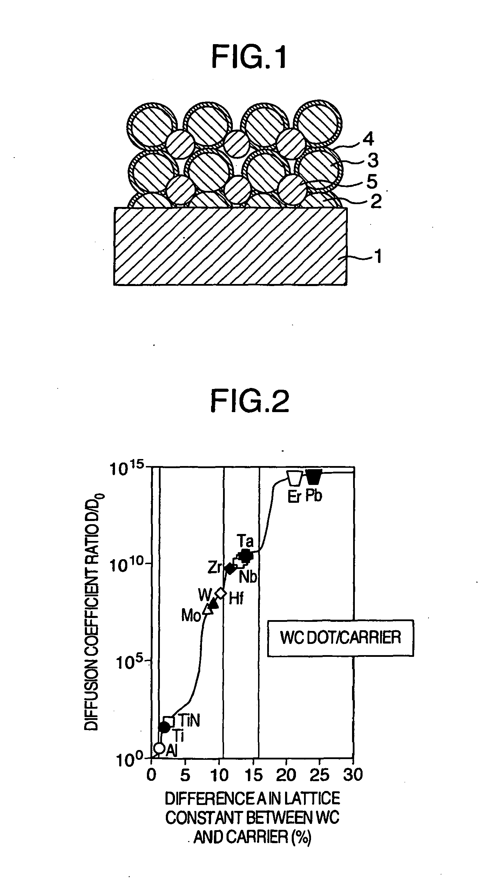

First, Fig. 1 outlines the major parts of a catalyst structure of the first embodiment of the present invention. As illustrated in Fig. 1, the catalyst structure is provided with the carrier 1 which supports the nano-dots 2 coming into contact with the carrier 1 and catalyst particles 3, in this order. In Fig. 1, the illustrated structure is also provided with the inclusion particles 5 and coating material 4 around the particles 3. The nano-dots 2, catalyst particles 3 and inclusion particles 5 may be formed by physical deposition or chemical vapor deposition (CVD), for example. The coating material 4 may be formed by coating, physical deposition or chemical vapor deposition (CVD), for example. They are formed by a step (1) for forming the nano-dots 2 to a thickness of 0.4 nm to several tens nm or so, followed by a step (2) for forming the inclusion particles 5 to a thickness of 0.4 nm to several tens nm or so, step (3) for forming the catalyst particles 3 to a thickness of 0.4 nm to several tens nm or so and step (4) for forming the coating material coating material 4 to a thickness of 0.4 nm to several tens nm or so, in a sequential order of (2), (3), (4), (2), (3), (4) and so on. The sequential order may be changed to (4), (2), (3), (4), (2), (3) and so on, or (2), (4), (3), (2), (4), (3) and so on after the step (1). The major component material for the inclusion particles 5 may be the same as that for the carrier 1. The inclusion particles 5 and coating material 4 may be omitted, when they are unnecessary. The nano-dots 2 and catalyst particles 3 are mainly composed of WC, MoC or TaC, which is less expensive than a platinum group metal. The catalyst particles composed of WC may be formed by, e.g., bringing gaseous tungsten hexacarbonyl into contact with the heated carrier 1. The catalyst particles may be also formed by, e.g., exposing the carrier to W and C vapors.

In the above catalyst structure, the difference in the lattice constants between the carrier 1 material and the nano-dot 2 material are kept at 16% or less. The difference is 1% or more, preferably 1% to 11% for the following reason. When the lattice constants satisfy the above conditions, the nano-dots 2 and catalyst particles 3 can be sufficiently fine (e.g., 10 nm or less) at room temperature (20°C) to increase the total surface area of the catalyst particles 3 and hence to improve the catalytic activity functions. When the difference is below 1%, the nano-dot constituent atoms are arranged in accordance with the atomic arrangement on the carrier 1 surface, with the result that the nano-dots and catalyst particles are arranged in the form of a film on the carrier 1 surface. It is therefore difficult to increase the total surface area of the catalyst particles. When the difference is above 16%, the carrier 1 and nano-dots 2 will become unstable because of excessive lattice unconformity, with the result that the nano-dot constituent atoms diffuse actively to agglomerate each other. This increases nano-dot 2 size, which is accompanied by increased catalyst particle size, and the total surface area of the catalyst particles cannot be increased. When the difference is 16% or less, diffusion of the nano-dots can be controlled to keep the nano-dots and catalyst particles sufficiently fine (e.g., 10 nm or less in size) at room temperature. The difference is controlled at 1% or more. The nano-dots 2 and catalyst particles 3 share a major component to prevent unstable conditions.

In order to explain effects of this embodiment in detail, examples of analysis by use of molecular dynamic simulation are described below. As described in Journal of Applied Physics, Vol. 54, 1983, pp. 4877, the molecular dynamic simulation is a method wherein a force acting on each atom through an interatomic potential is calculated, a Newton's equation of motion is solved based thereon to estimate position of each atom at a given time. In this embodiment, an interaction between different elements is calculated by the above analysis in which charge transfer is taken into consideration to establish the relationship described later.

The major effect of the present invention observed in this embodiment is that the catalyst particles can be sufficiently fine at room temperature by keeping a difference in lattice constant between the carrier 1 material and catalyst particle 3 material at 16% or less, because of controlled diffusion of the catalyst particles, as discussed above. This effect can be demonstrated by calculating diffusion coefficient of the catalyst particles 2 in the vicinity of the interface with the carrier 1 to analyze its dependence on lattice unconformity. Application of the molecular dynamic simulation to calculation of diffusion coefficient is discussed by, e.g., Physical Review B, Vol. 29, 1984, pp. 5367 to 5369.

First, simulation is made for a catalyst structure wherein WC is used as materials for nano-dots 2 and catalyst particles 3 without using the coating material 4. The results are shown in Fig. 2, wherein the horizontal axis indicates relative difference A between lattice constant of the nano-dots 2 formed and lattice constant a of the carrier 1, and the longitudinal axis indicates calculated diffusion coefficient D of the catalyst particles 2 in the interface with the carrier 1. Here, the lattice constant means the distance between the nearest atoms. In Fig. 2, Do denotes diffusion coefficient of W wherein both the nano-dots 2 and carrier 1 are composed of WC.

In this embodiment, it is preferable to use WC as one example. However, the above-described nano-dots and catalyst particles may be mainly composed of MoC or TaC, which has a lattice constant similar to that of WC and hence basically similar properties. The following description is made with WC taken as an example for the nano-dots and catalyst particles by referring to the figures, while omitting description of MoC and TaC.

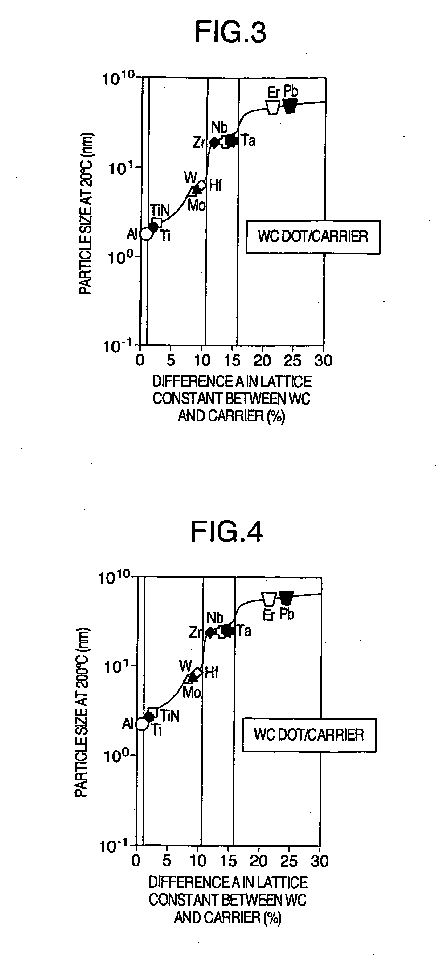

The simulation results shown in Fig. 2 indicate that the nano-dots have a higher diffusion coefficient, more agglomerating each other to grow, as they have larger difference in the lattice constant. As shown, Al, Ti and TiN have a lower diffusion coefficient, and W, Mo, Hf, Er and Pb have a higher coefficient in an ascending order, Pb having the highest. Fig. 3 shows the simulation results with respect to particle size. The results are very similar to those shown in Fig. 2, indicating that the particles have a larger size in the high diffusion coefficient region. It is particularly noted that the diffusion coefficient shown in Fig. 2 significantly increases as the lattice constant difference exceeds 16%. Therefore, the difference is set at 16% or less. The size shown in Fig. 3 also notably increases at a difference above 16%. At a difference below 1%, it is observed that the particles are arranged in a film, although the particle size is not shown in Fig. 3. To summarize, the difference is 1 to 16%, inclusive in order to increase the total particle size surface. The difference is preferably 11% or less in order to sufficiently decrease the particle size (e.g., to 5 nm or less), as indicated in Fig. 3.

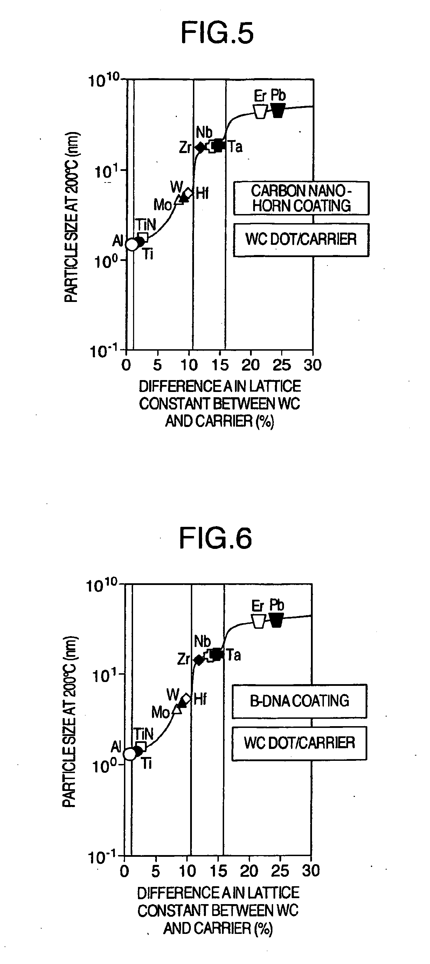

Fig. 4 shows the particle size at 200°C, which is larger at the same lattice constant difference than the catalyst particle size at room temperature shown in Fig. 3. On the other hand, Fig. 5 shows the simulation results at 200°C wherein a coating material composed of carbon nano-horn is used. Comparing the results shown in Fig. 5 with those shown in Fig. 4 which gives the results in the absence of coating material, the particle size is reduced by about 20% to 30% in Fig. 5. It is thus considered that the coating material composed of carbon nano-horn works to prevent particle growth at high temperature.

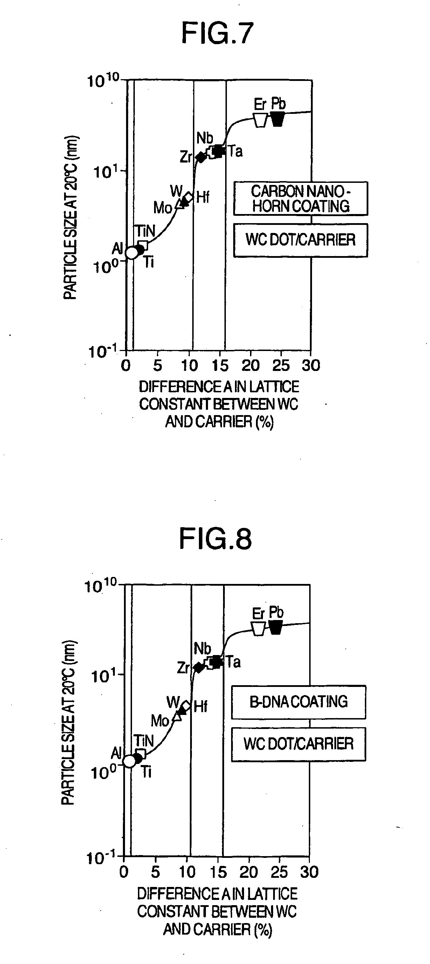

Fig. 6 shows the simulated particle size at 200°C wherein a coating material composed of B-DNA is used. Comparing the results shown in Fig. 6 with those shown in Fig. 5 which gives the results with carbon nano-horn, the size with B-DNA is reduced by about 20% to 30% in Fig. 6. It is thus considered that B-DNA works to prevent particle growth more efficiently than carbon nano-horn. Figs. 7 and 8 show the simulation results of particle size at 20°C, which correspond to those shown in Figs. 5 and 6, respectively. The particle sizes at 20°C are close to those at 200°C shown in Figs. 5 and 6. Thus, it is considered that the coating material composed of carbon nano-horn or B-DNA has an effect of reducing particle size, irrespective of temperature.

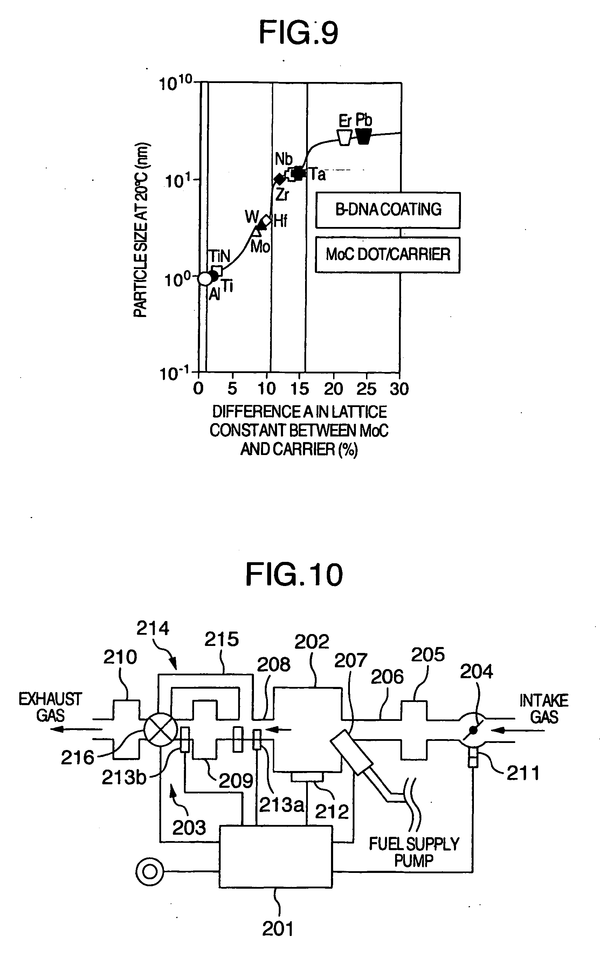

The above embodiment describes the catalyst structure with WC used for the nano-dots and catalyst particles. However, WC may be replaced by TaC or MoC. It can be demonstrated by simulation that TaC or MoC attains similar effect. For example, Fig. 9 shows the simulation results with MoC used for the nano-dots and catalyst particles and with B-DNA for the coating material, indicating the particle size at 20°C. The results are almost similar to those shown in Fig. 8. Thus, it is found that WC can be replaced by MoC to attain the effect of stably reducing the particle size.

Next, Fig. 10 outlines an exhaust gas treatment system as the second embodiment of the present invention. This example of the system has a form similar to that disclosed in Fig. 1 of JP-A 2003-247414. As illustrated in Fig. 10, this example of the system includes the electronic control unit (ECU) 201 for engine operation, internal combustion engine 202, exhaust gas system 203, throttle valve 204, surge tank 205, intake manifold 206, fuel injection device 207, exhaust gas manifold 208, upstream catalytic converter 209, downstream catalytic converter 210, throttle opening sensor 211, crank angle sensor 212, oxygen sensor 213a, 213b, bypass means 214, bypass passage 215, and passage switching valve 216. The oxygen sensor 213a senses an air/fuel ratio of a combustion mixture burned by oxygen remaining in exhaust gases, and oxygen sensor 213b senses whether the bypass switching means works properly or not. In this system, the upstream catalytic converter which works at high temperature has, for example, catalyst structure similar to that described in the first embodiment. For example, the catalyst for the upstream catalytic converter is preferably composed of WC, MoC or TaC particles supported by one major component selected from the group consisting of Al, Ti, TiN, W, Mo and Hf, particularly preferably at least one selected from the group consisting of Al, Ti and TiN. This catalyst can keep the lattice constant difference at a desired level and, at the same time, the particle size can be sufficiently fine. The catalyst particles produced by a conventional technique for the upstream catalytic converter, which works at a high temperature, tend to grow so that the particle size tends to large. In contrast, the catalyst particles of this embodiment can be kept fine to exhibit high functions for the exhaust gas treatment system. Moreover, Al, Ti, TiN, W, Mo or Hf used as the major component for the carrier has an advantage of being stably bonded to a gas passage material, e.g., metal, ceramic or polymer.

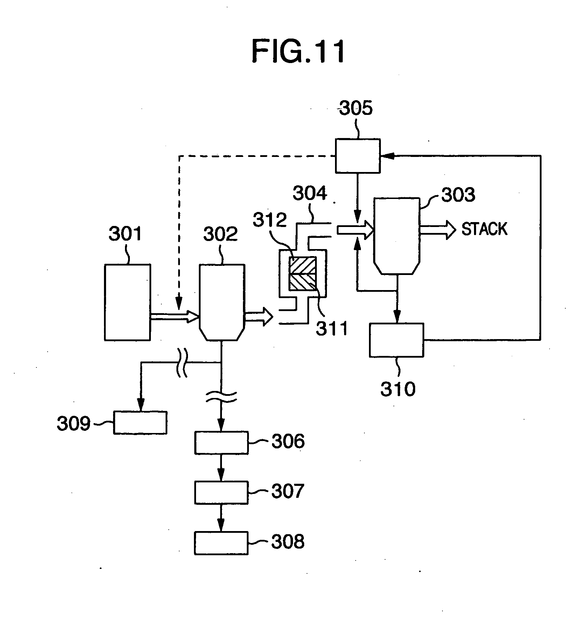

Fig. 11 outlines an exhaust gas treatment system as the third embodiment of the present invention. This example of the system has a form similar to that disclosed in Fig. 1 of JP-A 2004-24979. This example of the exhaust gas treatment system includes exhaust gas source 301, first bag filter 302, second bag filter 303, adsorbent-holding bed 304, neutralizer injection device 305, fly ash heater 306, heavy metal treatment device 307, land reclamation device 308, ash melting device 309 and regenerator 310. The adsorbent-holding bed 304 in this embodiment holds the adsorbent 311 for removing an organic halogen compound by adsorption and the catalyst structure 312 for decomposing and removing these compounds mainly by the catalytic action. The system of this embodiment is characterized by the catalyst structure 312, such as that described in the first embodiment. The catalyst structure 312 is preferably composed of catalyst particles of WC, MoC or TaC particles supported by one major component element selected from the group consisting of Al, Ti, TiN, W, Mo and Hf, particularly preferably at least one selected from the group consisting of Al, Ti and TiN. This catalyst can keep the lattice constant difference at a desired level and, at the same time, the particle size can be sufficiently fine. The catalyst particles produced by a conventional technique for the catalyst structure 312 tend to have large particle size, because they may be exposed to exhaust gases of high temperature. In contrast, the catalyst particles of this embodiment can be kept fine to exhibit high functions for the exhaust gas treatment system. Moreover, Al, Ti, TiN, W, Mo or Hf used as the major component element for the carrier has an advantage of being stably bonded to a gas passage material, e.g., metal, ceramic or polymer.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the scope of the appended claims.

## Claims

1. An exhaust gas treatment system for internal combustion engines, comprising an exhaust gas supply section for supplying exhaust gases from an internal combustion engine (202) and a catalytic converter into which the exhaust gases supplied by the exhaust gas supply section are charged, said catalytic converter comprising a catalyst structure for treating exhaust gases, comprising a carrier (1), nano-dots (2) formed on the carrier (1) and catalyst particles (3) formed on the nano-dots (2), wherein the nano-dots (2) and the catalyst particles (3) are composed of WC or MoC as the major component and the carrier (1) is composed of one selected from the group consisting of Al, Ti, TiN, W, Mo and Hf as the major component, and wherein the carrier material and the nano-dot material are selected from the above specified materials such that a difference in the distance between the nearest atoms of the carrier material and the distance between the nearest atoms of the nano-dot material is 1% to 16%.

2. An exhaust gas treatment system according to claim 1, wherein the nano-dots (2) are located adjacent to the carrier (1), and a coating material is formed in contact with each of the catalyst particles (3).

3. An exhaust gas treatment system according to claim 2, wherein the nano-dots (2) and the catalyst particles (3) have a size of 2.6 nm to 4,2 nm and the coating material is composed of B-DNA molecule as major component.

4. An exhaust gas treatment system according to claim 2, wherein the coating material is composed of carbon nano-horn as the major component.

5. An exhaust gas treatment system according to any of the preceding claims, comprising an exhaust gas supply section, a first bag filter (302) for removing dust and soot from the exhaust gas supplied, an adsorbent-holding bed (304) contains the catalyst structure (312) for removing an organic halogen compound from the exhaust gas flowing from the first bag filter (302), and a second bag filter (303) for removing acidic component from the exhaust gas flowing from the adsorbent-holding bed (304).

## Patentansprüche

1. Abgasbehandlungssystem für Verbrennungsmotoren, mit einem Abgaszufuhrabschnitt zum Zuführen von Abgasen von einem Verbrennungsmotor (202) und einem Katalysator, in den die von dem Abgaszufuhrabschnitt zugeführten Abgase geladen werden, wobei der Katalysator eine Katalysatorstruktur zum Behandeln von Abgasen umfasst, die einen Träger (1), auf dem Träger (1) ausgebildete Nanodots (2) und auf den Nanodots (2) ausgebildete Katalysatorteilchen (3) umfasst, wobei die Nanodots (2) und die Katalysatorteilchen (3) aus WC oder MoC als dem Hauptbestandteil zusammengesetzt sind und der Träger (1) aus einem Material als dem Hauptbestandteil zusammengesetzt ist, das aus der Gruppe ausgewählt ist, die aus Al, Ti, TiN, W, Mo und Hf besteht, und wobei das Trägermaterial und das Nanodotmaterial aus den oben angeführten Materialien so ausgewählt sind, dass eine Differenz im Abstand zwischen den nächstliegenden Atomen des Trägermaterials und dem Abstand zwischen den nächstliegenden Atomen des Nanodotmaterials 1% bis 16% beträgt.

2. Abgasbehandlungssystem nach Anspruch 1, wobei sich die Nanodots (2) neben dem Träger (1) befinden und ein Beschichtungsmaterial in Kontakt mit jedem der Katalysatorteilchen (3) ausgebildet ist.

3. Abgasbehandlungssystem nach Anspruch 2, wobei die Nanodots (2) und die Katalysatorteilchen (3) eine Größe von 2,6 nm bis 4,2 nm aufweisen und das Beschichtungsmaterial aus B-DNA-Molekül als Hauptbestandteil zusammengesetzt ist.

4. Abgasbehandlungssystem nach Anspruch 2, wobei das Beschichtungsmaterial aus Kohlenstoff-Nanohorn als dem Hauptbestandteil zusammengesetzt ist.

5. Abgasbehandlungssystem nach irgendeinem der vorhergehenden Ansprüche, mit einem Abgaszufuhrabschnitt, einem ersten Beutelfilter (302) zum Entfernen von Staub und Ruß aus dem zugeführten Abgas, einem Adsorbens enthaltenden Bett (304), das die Katalysatorstruktur (312) zum Entfernen einer organischen Halogenverbindung aus dem Abgas enthält, das aus dem ersten Beutelfilter (302) strömt, und einem zweiten Beutelfilter (303) zum Entfernen eines sauren Bestandteils aus dem Abgas, das aus dem Adsorbens enthaltenden Bett (304) strömt.

## Revendications

1. Système de traitement de gaz d'échappement pour des moteurs à combustion interne, comportant une partie d'alimentation en gaz d'échappement pour acheminer des gaz d'échappement provenant d'un moteur à combustion interne (202) et un convertisseur catalytique dans lequel les gaz d'échappement délivrés par la partie d'alimentation en gaz d'échappement sont chargés, ledit convertisseur catalytique comportant une structure de catalyseur destinée à traiter les gaz d'échappement, comportant un support (1), des nanopoints (2) formés sur le support (1) et des particules de catalyseur (3) formées sur les nanopoints (2), dans lequel les nanopoints (2) et les particules de catalyseur (3) sont constitués de WC ou de MoC en tant que composant majeur et le support (1) est constitué d'un élément choisi parmi le groupe constitué de Al, Ti, TiN, W, Mo et Hf en tant que composant majeur, et dans lequel le matériau du support et le matériau des nanopoints sont choisis parmi les matériaux spécifiés ci-dessus de telle sorte qu'une différence dans la distance entre les atomes les plus proches du matériau de support et la distance entre les atomes les plus proches du matériau des nanopoints est de 1 % à 16 %.

2. Système de traitement de gaz d'échappement selon la revendication 1, dans lequel les nanopoints (2) sont situés adjacents au support (1), et un matériau de revêtement est formé au contact avec chacune des particules de catalyseur (3).

3. Système de traitement de gaz d'échappement selon la revendication 2, dans lequel les nanopoints (2) et les particules de catalyseur (3) ont une taille de 2,6 nm à 4,2 nm et le matériau de revêtement est constitué de molécule de B-DNA en tant que composant majeur.

4. Système de traitement de gaz d'échappement selon la revendication 2, dans lequel le matériau de revêtement est constitué de nanocornet de carbone en tant que composant majeur.

5. Système de traitement de gaz d'échappement selon l'une quelconque des revendications précédentes, comportant une partie d'alimentation en gaz d'échappement, un premier filtre à manche (302) pour retirer la poussière et la suie des gaz d'échappement délivrés, un lit de fixation d'adsorbant (304) contenant la structure de catalyseur (312) pour retirer un composé halogène organique du gaz d'échappement s'écoulant à partir du premier filtre à manche (302), et un second filtre à manche (303) pour retirer un composant acide du gaz d'échappement s'écoulant à partir du lit de fixation d'adsorbant (304).
